(19) Europäisches Patentamt
European Patent Office
Office européen des brevets

(11) **EP 4 502 618 B1**

(12) **EUROPEAN PATENT SPECIFICATION**

(45) Date of publication and mention
of the grant of the patent:
**15.10.2025 Bulletin 2025/42**

(21) Application number: **23189693.7**

(22) Date of filing: **04.08.2023**

(51) International Patent Classification (IPC):
**G01N 35/04** (2006.01)    **B01L 9/06** (2006.01)

(52) Cooperative Patent Classification (CPC):
**G01N 35/04; B01L 9/06;** B01L 2200/0684;
B01L 2200/141; B01L 2200/18; G01N 2035/0427;
G01N 2035/0477

(54) **SAMPLE CARRIER, SAMPLE TRANSPORT SYSTEM, AND METHOD OF SLOWING A SAMPLE CARRIER**

PROBENTRÄGER, PROBENTRANSPORTSYSTEM UND VERFAHREN ZUM ABBREMSEN EINES PROBENTRÄGERS

PORTE-ÉCHANTILLON, SYSTÈME DE TRANSPORT D'ÉCHANTILLON ET PROCÉDÉ DE RALENTISSEMENT D'UN PORTE-ÉCHANTILLON

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**05.02.2025 Bulletin 2025/06**

(73) Proprietor: **Beckman Coulter, Inc.**
**Brea, CA 92821 (US)**

(72) Inventor: **BRUGGAIER, Christoph F.**
**81377 München (DE)**

(74) Representative: **Maiwald GmbH**
**Elisenhof**
**Elisenstraße 3**
**80335 München (DE)**

(56) References cited:
**WO-A1-2013/070748     WO-A1-2016/012517**

**Description**

The invention relates to a sample carrier, sample transport systems, and a method of slowing a sample carrier.

A sample transport system, also called specimen transport system, may be used to convey samples within a laboratory analysis system. Samples may be samples of blood and/or other bodily fluids on which laboratory analysis is to be performed. Preparation of a sample for analysis may require transporting the sample to various stations for aliquoting, centrifuging, or other processes. The sample may then be transported to a location where an analysis is performed and/or to an output station for storage or disposal.

Various sample transport systems may be used to transport samples between stations of a laboratory analysis system. For example, a conveyor sample transport system may use a conveyor belt or conveyor track to transport sample tubes between stations.

Typically, a sample tube is inserted into a sample carrier that holds the sample in a fixed upright position for transport by the sample transport system. Routing mechanisms such as diverting arms may be used to divert the sample carriers from one station and/or track of the sample transport system to another.

Sample transport systems may be operated at low speeds to limit the negative influence of sample carrier impacts on the sample quality. Impacts occur between sample carriers when a first sample carrier encounters an obstacle, e.g., at a station of the sample transportat system, and/or when a second sample carrier following the first sample carrier collides with the first sample carrier as they queue behind the obstacle. An impact may also occur when a sample carrier is moved between lanes of the track system by a diverting arm, applying acceleration forces.

These impacts may cause the sample, e.g., the contents of a sample tube, to splash out from a sample carrier and/or create bubbles on a sample surface. Bubbles on the sample surface may cause false readings on sensors of the sample transport system, in particular on liquid level sensors. Impacts may also cause fluid layers in a sample, established by a previous centrifugation process, to re-mix, affecting sample quality and jeopardizing the usability for downstream tests.

Document US 8,973,736 B2 discloses a transport system wherein the sample carriers are provided with repelling magnets influencing the impacts of the sample carriers. However, repelling magnets do not expose any dampening effect. In contrary, they may prevent the sample carriers from coming to a rest in a sample carrier queue if friction in the transport system is low enough. The energy exchange between sample carriers comprising repelling magnets induces solitary waves in the chain of sample carriers waiting on the track of the sample transport system. This comes with a risk of splashing, cross contamination and bubble creation within the samples of the other sample carriers waiting in line. Also, the persisting repelling properties between the sample carrier magnets do not allow to build up a line of carriers with predetermined distance to each other.

In view of the above, a problem relates to enabling improved sample transport systems, e.g., sample transport systems being configured to operate at higher speed and/or at a higher throughput. A problem may also relate to reducing the risk of sample carrier impacts and/or enabling an improved dampening of sample carriers in sample transport systems.

This problem is solved by the subject-matter of the independent claims. The dependent claims relate to embodiments of the invention.

The present invention relates to a sample carrier configured to transport a sample along a track of a sample transport system according to claim 1.

The sample carrier comprises a sample transport section configured to hold and transport the sample. The sample carrier further comprises a conductive, for example metallic, section and a magnetic section. The magnetic section is configured to induce an eddy current in an adjacent conductive section of another element of the sample transport system when there is a relative movement between the sample carrier and this other element. The conductive section is configured to experience eddy current induced by a magnetic section of another element of the sample transport system when there is a relative movement between the sample carrier and this other element.

The sample carrier may be an element of a sample transport system. The sample transport system, sometimes also referred to as sample transportation system, may be a system as described above. Thus, the sample transport system may be used to convey samples within a laboratory analysis system. Samples may be, e.g., samples of blood and/or other, for example bodily, fluids on which laboratory analysis is to be performed or which are used within such a system. Preparation of a sample for analysis may require transporting the sample to various stations for aliquoting, centrifuging, analyzing and/or other processing. The sample transport system may comprise one or more stations to which the sample may be transported. At these stations, analysis and/or processing of the sample may be performed.

The sample transport system may comprise a plurality of sample carriers, each being an element of the sample transport system. These sample carriers of the sample transport system may be configured similarly and/or structurally identical. The sample transport system may comprise a conveyor belt and/or conveyor track to transport samples between stations of the sample transport system. The sample carriers may be arranged on the conveyor belt and/or conveyor track transporting the sample carriers by, e.g., friction. The sample carriers may also be moving in a self-propelled manner. Movement within the sample transport system may also be based on airflow and/or on a roller conveyor.

The sample transport system comprises at least one track along which the sample carriers are transported and/or moving. The track may be provided as a predefined route through at least a part of the sample transport system. The stations of the sample transport system may be arranged along the track of the sample transport system. The sample transport system may comprise routing mechanisms such as stoppers to provide fixed positions where samples are aspirated by an analyzer or taken out by a tube robot, diverting arms to divert the sample carriers from one track to another and/or discs which revert the travelling direction of the sample carrier.

The sample may be provided as a sample tube inserted into the sample carrier. The sample tube may hold the sample in a fixed upright position for transport along the track of the sample transport system. Then, the sample transport section is configured to hold a sample tube, e.g., in a fixed upright position.

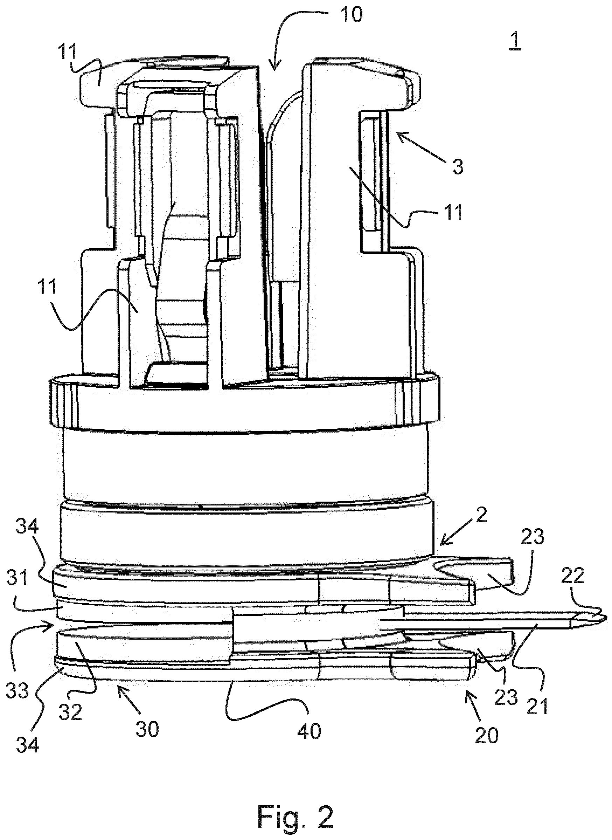

Generally, the sample transport section of the sample carrier is configured to hold and transport the sample. The sample transport section may comprise a socket and/or a seating and/or a clamping mechanism or similar configured to receive the sample. The sample may be fixed and/or secured to the sample carrier, in particular to its sample transport section. The sample carrier may also comprise a plurality of sample transport sections (not shown in Fig. 2) enabling it to hold a plurality of samples at the same time.

The sample carrier comprises at least the one conductive section. Herein, conductive corresponds to electrically conductive. The conductive section is provided from and/or comprises a conductive material that allows eddy current to be induced in it. It may, e.g., be provided from a metallic material. The conductive section may be provided with predetermined dimensions. The conductive section of the sample carrier may be provided at an edge and/or side of the sample carrier, so that it is accessible from the outside of the sample carrier, e.g., from another element of the sample transport system. This may improve the interaction of the conductive section with a magnetic field, in particular the magnetic field of a magnetic section of another element of the sample transport system. This other element may, e.g., be another sample carrier of similar or identical structure. The conductive section may, e.g., be provided as a protrusion protruding from the sample carrier. As a protrusion, the conductive section may easily be inserted into the magnetic field of a magnetic section of an adjacent sample carrier as another element of the sample transport system. Alternatively, the other element may, e.g., be a station, a stop and/or a track or another component of the sample transport system.

The conductive section may be provided at front end and/or back end of the sample carrier in movement direction. Thus, the conductive section may easily interact with the magnetic field of a magnetic section of another element of the sample transport system, e.g., another sample carrier preceding or following the sample carrier on the track of the sample transport system.

The sample carrier comprises at least the one magnetic section. The magnetic section is configured to induce an eddy current in a conductive section of another element of the sample transportation system, e.g., another sample carrier. This induction may occur when a preceding or following sample carrier is moving along the track in vicinity of the magnetic section. Alternatively, the other element may, e.g., be a station, a stop and/or a track of the sample transportation system.

The magnetic section may comprise at least one permanent magnet providing a magnetic field in the vicinity of the electrically conductive section. The magnetic section may comprise a plurality of permanent magnets, e.g., two permanent magnets. The permanent magnets may be arranged so that the magnetic field in the vicinity of the magnetic section is channelled and/or homogenized, and thus increased in strength, in at least one area. The magnetic section may comprise further elements not being magnetic, e.g., fixing means.

The magnetic field lines created by the magnet may be channelled by a magnetically conductive yoke. The yoke may be arranged in a way that the magnetic field in the vicinity of the electrically conductive element is channelled and homogenized and thus increased in strength in at least one area. The magnetically conductive yoke may be provided as an element of the magnetic section.

For example, two permanent magnets of the magnetic section may be arranged so that one magnetic north pole of a first permanent magnet faces one magnetic south pole from a second permanent magnet. With this arrangement, the magnetic field of one magnet of one magnet combines with the magnetic field of the other magnet.

Similar as the conductive section, also the magnetic section of the sample carrier may be provided at an edge of the sample carrier, so that it is accessible from the outside of the sample carrier. This may improve the interaction of the magnetic section with a conductive section of an adjacent sample carrier as another element of the sample transportation system. The magnetic section may, e.g., be provided with a recess in which a magnetic field is provided. The conductive section of an adjacent sample carrier may be configured to be inserted into said recess and interact with the magnetic field of the magnetic section. Alternatively, the conductive section may be provided with a recess which a magnetic section (e.g., comprising a magnetic protrusion) of an adjacent sample carrier may at least partially enter so that the two sections may interact with each other. The magnetic section of said adjacent sample carrier may be configured to be at least partially inserted into said recess of the conductive section so that an eddy current is induced in said conductive section with the recess.

Thus, generally, one of the two sections may be provided with a recess and the other one with a protrusion configured to enter a structurally identical recess of an adjacent sample carrier at least partially when the two consecutive sample carriers come close to each other.

Preferably, each sample carrier of the sample transport system comprises a conductive section and a magnetic section. E.g., all sample carriers of the sample transport system may be structurally identical or similar. The sample carriers may be arranged on the track of the sample transportation system so that all their conductive sections are arranged in movement direction along the track (i.e., facing forward) and all their magnetic section are arranged facing against the movement direction, i.e., backwards, respectively. Alternatively, they may be arranged facing the other way around, with the magnetic sections facing forward in movement direction and the conductive sections facing backwards in movement direction, respectively. Then the conductive section of one sample carrier may interact with the magnetic section of the following and/or preceding sample carrier whenever these sample carriers come close enough to each other.

It is the nature of the eddy current that it acts against the current relative movement between the involved conductive section and magnetic section. Thus, when the eddy current is induced by the sample carrier moving into the vicinity of the magnetic section of another element (e.g., a preceding sample carrier) of the sample transportation system, it acts against the movement of the sample carrier and slows it down.

One each of the magnetic and the conductive sections may be arranged at the frontside and one at the backside of the sample carrier. Thus, one of these sections acts forwards and may interact with a preceding sample carrier, and the other one backwards so that it may interact with a following sample carrier.

The sample carrier is configured for using an induced eddy current slowing the sample carrier at, e.g., stations of the sample transportation system and/or during queuing of the sample carriers. The strength of the negative acceleration effectively establishing between the sample carriers with different speed vector values, materialising as a breaking force, is slowing the sample carrier depending on the strength of the eddy current. The strength of the eddy current depends on the relative speed between the conductive and the magnetic sections interacting to induce the eddy current. Thus, whenever there is only a small relative movement, there is also only small negative acceleration force being produced. However, the breaking force increases with the relative speed. Thus, this configuration may be suitable to slow down both slow and fast moving sample carriers appropriately.

Additionally, there is no eddy current induced when two adjacent sample carriers are not moving in close vicinity to each other, where they are not moving or where they are moving with the same motion vector. Thus, there is no eddy current causing any breaking force in this still state, which may be an advantage over the known transportation system described above with opposing magnets arranged at the sample carriers also acting during, e.g., queuing.

Thus, the configuration enables a dynamic slowing of the sample carriers, wherein the slowing force and/or negative acceleration ('breaking') force of the sample carriers increases with their relative speed and is, thus, dynamic.

Additionally, the interacting sample carriers may not only be used to slow sample carriers arriving at a stop and/or a station of the sample transportation system, but also to limit the speed of sample carriers leaving the station and accelerating along the track towards the next station. This is because the sample carrier comprises both a conductive section and a magnetic section and the same negative acceleration becomes effective when the relative movement between the magnetic section and the conductive section is reversed. A first of these sections may interact with a preceding sample carrier, a second of these sections may interact with a following sample carrier. Thus, there may be an interaction in both a forward and a backward direction along the track.

The sample carrier may further comprise at least one mechanical stop or damper for absorbing the remaining residual kinetic energy not fully dissipated in the electrically conductive section by the eddy current.

The sample carrier may be provided as a self-controlled carrier, i.e., the sample carrier may be free of any external and/or internal (electrical and/or Software) controller controlling any acceleration and/or deceleration of the sample carrier. The sample carrier may be considered as self-controlled, because its velocity may be slowed down without physical contact to a stopper and without needing any control signal from any controller. As soon as the sample carrier moves into the vicinity of another sample carrier so that their conductive and/or magnetic section(s) interact, the sample carrier may be slowed down without the generation of any control signal.

Therefore, an improved sample carrier is provided. The invention enables sample carriers being slowed depending on their speed, which may enable a faster overall movement speed of the sample carriers and, thus, an increased throughput of the sample transportation system. The slowing of the sample carriers may very much reduce or even fully eliminate spilling of sample tubes being transported in the sample transport sections of the sample carriers. It may also reduce bubble creation within sample tubes and, thus, increase the accuracy of sensors of the sample transportation system.

According to an embodiment, the conductive section comprises a conductive protrusion protruding from a frontside and/or backside of the sample carrier. With the conductive protrusion, the conductive section may comprise an easily accessible conductive part that may interact with the magnetic section of the other element of the sample transportation system. The conductive protrusion may be configured to engage the magnetic field of said magnetic section, e.g., a recess of said magnetic section, thereby enabling an improved coupling between the involved magnetic section and the conductive protrusion. Said improved coupling may strengthen the induced eddy current and, thus, the resulting negative acceleration ('breaking' or 'damping') force. Therein, frontside of the sample carrier is the side facing in a movement direction along the track, and the backside of the sample carrier is the side facing against said movement direction.

In a development of the embodiment, the conductive protrusion is provided as a conductive plate protruding from the sample carrier. The conductive plate may comprise predetermined dimensions and/or a predetermined thickness. The thickness directions may be configured to be arranged substantially parallel to the magnetic field lines of the magnetic field it interacts with when an eddy current is induced in the conductive plate. Thus, the eddy current may be induced in a rather flat section of the conductive plate, which may improve the magnetic coupling and/or interaction. Furthermore, conductive plates may be readily available as standard products. The dimensions of the conductive plate, in particular its thickness, may be adjusted to the dimensions of a recess in the magnetic section of the other element of the sample transportation system.

According to an embodiment, the magnetic section comprises at least one recess configured to receive a conductive section of an adjacent sample carrier as another element of the sample transport system at least partially. The recess may be provided in a side of the sample carrier. It may be provided as a slot within the carrier. The magnetic section may produce a magnetic field within said recess. This may be achieved by, e.g., at least one permanent magnet being arranged at, at least, one side of the recess. Within the recess, the strength of the magnetic field may be well controlled. This enables a calculating of the involved magnetic forces. For example, the dimensions of the recess may be adapted to the dimensions and/or to a form of a conductive section of a following and/or preceding sample carrier. The recess allows the conductive section of the adjacent sample carrier to enter the recess and, thus, the magnetic field at a controlled position. This may improve the magnetic coupling and, thus, the efficiency of the eddy current break configuration.

In a development of the embodiment, the conductive section of the sample carrier is configured to fit into the recess of a structurally identical adjacent sample carrier. This enables structurally identical and/or similar sample carriers to interact with each other along the track of the sample transportation system. Structurally identical sample carriers may be mass produced, which may simplify production and/or design of the sample carriers.

In a development of the embodiment, the magnetic section comprises at least one magnet arranged at the recess so that a magnetic field of the magnet is arranged in the recess. The magnet may be provided as a permanent magnet. Arranging the magnet at and/or close to the recess improves the achieved magnetic field. Alternatively, a ferromagnet may be arranged between the magnet and the recess, thereby "extending" the magnetic field to the recess. The magnet may provide a reliable magnetic field and, thus, an improved magnetic coupling.

In a development of the embodiment, the magnetic section comprises at least two magnets arranged at sides of the recess so that a magnetic field between the two magnets is arranged in the recess. The magnets may be provided as permanent magnets. They may be arranged so that different magnetic poles face each other, thereby increasing the magnetic field in the recess. This may increase the magnetic coupling and the breaking force of the eddy current break described above.

In a development of the embodiment, the magnetic section further comprises a magnetically conductive yoke contacting both magnets, channelling, homogenizing and/or combining their magnetic fields. The magnetically conductive yoke may pick up the magnetic field lines leaving the far pole of one magnet and guide them back to the far pole of the opposite magnet, making sure that a continuous and maximized magnetic flow is provided. For this, the magnetically conductive yoke may also be provided from a ferromagnet. The magnetically conductive yoke may further increase the magnetic coupling and, thus, the induced eddy current.

The invention further relates to a sample transport system comprising a plurality of sample carriers according to claim 9.

The sample transport system may be provided as a laboratory analysing system in which the samples are transported by the sample carriers along the track. The sample transport system may comprise at least one station at which the sample carriers are slowed and/or stopped, e.g., for an analysing procedure like centrifuging etc. The track leads through at least a part of the sample transport system. The sample carriers may move on the track consecutively behind each other, e.g., in a single file manner. The sample carriers are arranged on the track so that the conductive section of a first sample carrier faces the magnetic section of a second adjacent sample carrier and/or so that the magnetic section of the first sample carrier faces the conductive section of a third adjacent sample carrier. Therein, the first sample carrier may be arranged in between the second and third sample carrier along the track. Preferably, all sample carriers of the sample transport system are arranged on the track oriented like the first sample carrier, so that all the conductive and magnetic sections of all the adjacent sample carriers are arranged to interact with each other. This enables an improved negative acceleration of the sample carriers along the track of the sample transport system by induced eddy currents. This may dampen movement and thus reduce impacts between the sample carriers.

According to an embodiment, a first and a second sample carrier of the plurality of sample carriers are transported behind each other along the track, wherein the first sample carrier and the second sample carrier are configured so that the magnetic section of the first sample carrier induces an eddy current in the conductive section of the second sample carrier slowing the later sample carrier whenever the later sample carrier moves into the vicinity of the leading sample carrier. This arrangement enables the eddy current breaking configuration described above.

According to an embodiment, the track comprises a rail guiding the sample carriers along the track. Therein, the track further comprises a driven section driving the sample carriers along the track. The rail may be configured to keep the sample carriers aligned on the track. The rail may comprise a substantially U-shaped cross section within which the sample carriers are arranged with a bottom and/or base section, respectively. The driven section may be provided as conveyor belt being driven on and/or in the rail. The sample carriers may be arranged on the conveyor belt so that the conveyor belt transports the sample carriers arranged on it, e.g., by friction. Stops along the track, e.g., at stations of the sample transportation system, may stall the sample carriers queued behind each other while the conveyor belt moves on under the sample carriers.

According to an embodiment, at least one stationary conductive section and/or at least one stationary magnetic section is arranged at the track of the sample transport system. Therein, said stationary conductive and/or magnetic section is configured to interact with the magnetic section and/or the conductive section of the sample carrier wherein the eddy current is induced. The principle of the eddy current break is the same as elaborated in the above description. However, in this embodiment, the sample transport system comprises an additional stationary magnetic section and/or stationary metallic section. "Stationary" in this context may mean that the respective stationary section is not arranged at any of the sample carriers. Thus, it is not moving together with the sample carrier along the track. However, the stationary section may interact with the (mobile) conductive section and/or magnetic section of the sample carrier. For example, when the sample carriers are arranged with their conductive section at their forward-facing side (i.e., in movement direction along the track), a stationary magnetic section may be arranged at a stopper and/or station of the sample transport system. Thus, whenever the sample carrier arrives (as first sample carrier) at the stationary magnetic section, it is slowed down because the stationary magnetic section induces an eddy current in the sample carrier's conductive section as described above. Whenever there is already at least one further sample carrier waiting (e.g., in a queue), the arriving sample carrier may interact with said waiting sample carrier and/or latest sample carrier in said queue.

Similarly, a stationary conductive section may be arranged at the track interacting with a forward facing (mobile) magnetic section of an arriving sample carrier in case the sample carriers are arranged this way round.

The stationary section may be arranged in a component of the sample transport system, e.g., in a station, in a stop and/or damper, within or adjacent to the track, and/or in any stationary component of the sample transport system. Said stationary component may itself be slightly movable, e.g., a stopper that may be arranged between a stop position on the track and an opened position besides the track. However, the stationary component does not move along the track as the sample carriers.

Herein, not both sides of the (half stationary) eddy current break are arranged on two adjacent sample carriers. Instead, only one section is arranged at the sample carriers, e.g., the metallic section. The other section, e.g., the magnetic section, is provided as a stationary magnetic section and arranged at a station of the sample transport system. For example, there may be a stationary magnetic section arranged at each station of the sample transport system. Thus, whenever a sample carrier arrives at the station, it moves into the vicinity of the stationary magnetic section. There, an eddy current is induced in the metallic section of the sample carrier slowing the sample carrier. Herein, each arriving sample carrier is slowed by the eddy current break when arriving at, e.g., predetermined positions along the track.

Also in this embodiment, the breaking force provided by the half stationary eddy current break depends on the relative velocity, i.e., the speed of the arriving sample carriers. Thus, also this embodiment enables a dynamic slowing of the sample carriers with the advantages described above.

According to a development of this embodiment, the stationary magnetic section is arranged at the track and the conductive section of the at least one sample carrier acts as eddy current break whenever the sample carrier moves along the track in the vicinity of the stationary magnetic section. Within the track, the at least one stationary magnetic section may be run by electromagnets. The magnetic field of electromagnets may be easily controlled by the current through the electromagnets. This may enable a controlling of the strength of the (half stationary) eddy current break.

According to a further development, the stationary magnetic section comprises a plurality of magnets having magnetic fields getting stronger in a movement direction of the sample carriers along the track. This increasing magnetic field may be provided, e.g., by electromagnets and/or by permanent magnets being arranged closer and closer to the track in movement direction. Thereby, the eddy current induced in the metallic section of the arriving sample carriers may be increased the further down the track and/or the closer the sample carrier comes to the station of the sample transport system.

Furthermore, the present invention relates to a method of slowing one of a plurality of sample carriers configured to transport a sample along a track of a sample transport system, according to claim

In the method:

- the sample carrier is configured for holding and transporting the sample along the track;
- a magnetic section and a conductive section are provided at different sample carriers of the sample transport system;
- the sample carrier comprises either the magnetic section or the conductive section;
- the magnetic section induces an eddy current in the conductive section when the sample carrier is moving along the track; and
- the conductive section experiences the eddy current induced by the magnetic section, wherein the eddy current is directed so that it acts against a current movement state of the sample carrier.

Herein, the sample transport system may comprise a plurality of sample carriers, e.g., structurally identical and/or similar sample carriers.

The sample carrier comprises at least one section of a pair of a magnetic section and a conductive section. The sample carrier may comprise both a conductive section of a first such pair and a magnetic section of a second such pair. Then the two sample carriers of the sample transport system comprising the two sections of the pair may be provided as two consecutive sample carriers following each other.

The method may be implemented using the sample carrier and/or the sample transport system according to any of the previous aspects. Therefore, the description of these aspects also relates to the method and vice versa.

Herein, the terms upper, lower, below, above, etc. refer to the reference system of the Earth in a mounting position of the subject-matter.

The numbers and/or angles given in the claims and the description are not limited to the exact numbers and/or angles but may include measurement inaccuracies within limits that still enable solving the underlying problem.

The invention is further illustrated in reference to embodiments shown in the figures. Embodiments of the invention are described with reference to the figures. Features of the embodiments shown in the figures may be combined with alternative embodiments. Identical reference numbers may identify identical or similar features of the embodiments.

Fig. 1     shows a schematic top view of an embodiment of a sample transport system.

Fig. 2     shows a perspective side view of an embodiment of a sample carrier.

Fig. 3     shows a perspective side view of two sample carriers engaging each other according to an embodiment.

Fig. 4     shows a schematic of a magnetic section of a first sample carrier engaging a conductive section of second sample carrier according to an embodiment.

Fig. 5     shows a bottom view of an embodiment of a sample carrier.

Fig. 6     shows a schematic of three sample carriers queuing on a track of a sample transport system according to an embodiment together with a schematic diagram indicating the involved velocities during a stop and a start phase of the sample carrier.

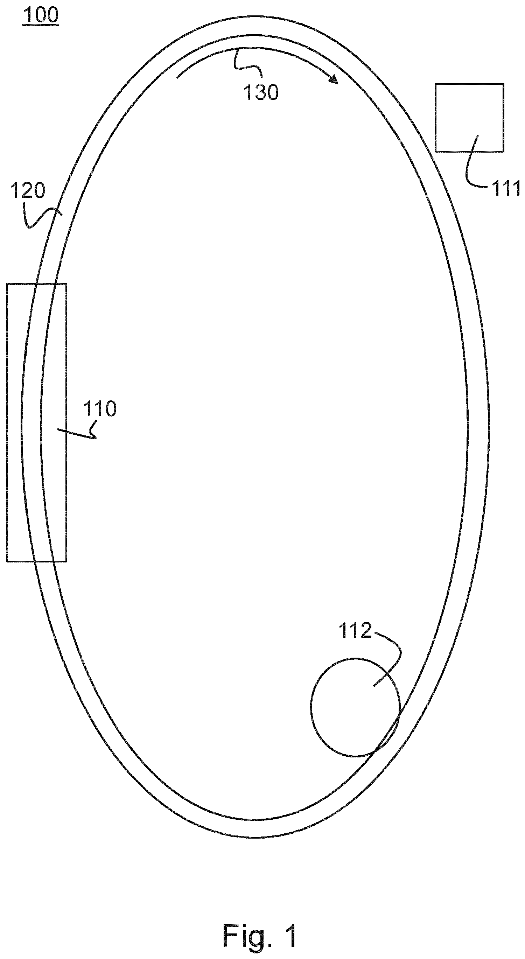

**Fig.** 1 shows a schematic top view of an embodiment of a sample transport system 100, sometimes also referred to as sample transportation system. The sample transport system 10 may also be referred to as specimen transport system. It may convey samples within a laboratory analysis system. Samples may be samples of blood and/or other bodily fluids on which laboratory analysis is to be performed.

The analysis may require transporting the sample to various stations 110, 111, and 112 of the sample transport system 100, e.g., for aliquoting, centrifuging, or other processes. The sample transport system 100 may comprise any number of stations 110-112, e.g., even more than the three stations 110-112 shown in Fig. 1.

The sample transport system 100 is configured to transport a plurality of samples at the same time, e.g., more than 10 samples, more than 50 sample, and/or more than 100 samples at the same time. For transporting the samples, the sample transport system 100 comprises a plurality of samples carriers (not shown in Fig. 1). An embodiment of such a sample carrier 1 is shown, e.g., in Fig. 2, cf. description below.

The sample transport system 100 shown in Fig. 1 may be provided as conveyor sample transport system configured to transport samples between the stations 110-112 of a laboratory analysis system. Therein, a driven conveyor belt moving along a track 120 in a movement direction 130 is used to transport samples, e.g., sample tubes, within the sample carriers 1 between the stations 110-112.

The sample carriers 1 move through the sample transport system 100 on the track 120 schematically shown in Fig. 1. The track 120 may be self-contained. Alternatively, the track 120 may have a start point and/or an end point. The track 120 may pass all or some of the different stations 110-112 of the sample transport system 100.

The sample transport system 100 may comprise more than one track along and/or between which the sample carriers 1 are transporting the samples.

The track 120 may comprise a rail and/or a conveyor belt. The rail may guide the conveyor belt and/or the sample carriers 1. The conveyor belt may move within the rail. It may carry the sample carriers 1 on its upper side.

At the stations 110-112, the sample carriers 1 are required to stop, e.g., for sorting, loading/unloading or for analysis of the sample they are carrying. At theses stops, queues of sample carriers 1 may build up, at which impacts of sample carriers 1 may occur. To prevent and/or dampen such impacts, the sample carriers 1 need to slow and/or stop, preferably without spilling anything of the sample and/or without mixing already centrifuged sample, and/or without bubbles building up in the sample which may lead to an incorrect sensor reading.

One embodiment of a stopping and/or slowing mechanism for the sample carriers 1 according to an embodiment is described below in reference to the following figures.

**Fig. 2** shows a perspective side view of an embodiment of one of the sample carriers 1 of the sample transport system 100 shown in Fig. 1.

The sample carrier 1 may stand upright on the track 120 (cf. Fig. 1) while holding a sample (not shown in the figures) in a sample transport section 10. The sample transport section 10 may be provided as a holding section like a socket wherein a sample like a sample tube may be arranged. In the shown embodiment, the sample transport section 10 may receive and/or hold a sample tube in an upright position. Thus, it may hold both closed and open sample tubes without spilling its contents.

The sample transport section 10 may be arranged between three fingers 11 of the sample carrier 1 pointing substantially upwards from a middle section of the sample carrier 1. The sample transport section 10 may be arranged at a top section 3 of the sample carrier 1.

The sample carrier 1 may extend from a bottom 40 at its lower end to its top section 3 where the sample transport section 10 may be provided. The bottom 40 may be substantially flat, so that the sample carrier 1 may stand securely on a conveyor belt of the sample transport system 100.

At the bottom 40, the sample carrier may comprise a base section 2. Between the base section 2 and the top section 3, the sample carrier 1 may comprise a middle section (not identified by a reference sign in the figures).

From the bottom 40 to the top section 3, the sample carrier may be substantially shaped like an upright cylinder.

The sample carrier 1 comprises both a conductive section 20 and a magnetic section 30. In the shown embodiment, the magnetic section 30 and the conductive section 20 are provided in the base section 2 of the sample carrier 1.

The conductive section 20 comprises a electrically conductive protrusion 21 protruding from the base section 2 away from the sample carrier 1, e.g., in a substantially horizontal direction. The conductive protrusion 21 may, e.g., point towards a forward or backward direction when viewed in the movement direction 130 along the track 120 (cf. Fig. 1).

The conductive protrusion 21 may comprise a tapered tip 22 for easier access into a recess of an adjacent sample carrier.

The conductive protrusion 21 may be provided from a conductive material that enables an eddy current being induced in the conductive protrusion 21 whenever the conductive protrusion 21 is moving relative to a magnetic field.

The magnetic section 30 of the sample carrier 10 is also provided in the base section 2, e.g., at the same height as the conductive section 20. The magnetic section 30 comprises a first magnet 31 and a second magnet 32. The first and second magnet 31,32 are spaced apart from each other so that a gap or recess 33 is arranged between them. Within said recess 33, both the first and the second magnet 31,32 produce a substantially homogenous magnetic field.

The first and the second magnet 31,32 may be arranged so that their magnetic field lines within the recess 33 align and blend into each other, increasing the magnetic flux: For example, the first magnet 31 may be arranged so that its north pole is facing the recess 33 on a first side, and the second magnet 32 may be arranged so that its south pole is facing the recess 33 on a second, substantially opposite side of the recess 33 (or vice versa). Then the magnetic field lines of the two magnets 31,32 align and blend into each other, increasing the magnetic flux within the recess 33.

The recess 33 may be arranged substantially at the same height as the conductive protrusion 21. The recess 33 may be arranged within the base section 2 in a substantially horizontal direction. The recess 33 may be provided as deep within the sample carrier 1 as long as the conductive protrusion 21 protrudes from it.

The conductive protrusion 21 may protrude from the sample carrier 1 in substantially the opposite direction as the recess 33 is formed within the sample carrier 1.

The conductive section 20 may further comprise at least one key surface 23, e.g., shell-like and/or substantially half-circled walls facing away from the sample carrier 1. In the shown embodiment, the conductive section 20 comprises two key surfaces 23, one above and one below the conductive protrusion 21. The key surface 23 may or may not be conductive itself. Relevant for the functionality of the conductive section 20 is rather that it comprises at least one conductive component, in the shown embodiment at least the conductive protrusion 21. These key surfaces 23 may ensure that the sample carriers 1 stay aligned within the track.

Similarly, the opposite side of the sample carrier 1, e.g., the magnetic section 30, may comprise at least one mating surface 34, e.g., shell-like and/or substantially half-circled walls facing away from the sample carrier 1. In the shown embodiment, the opposite side of the sample carrier comprises two mating surfaces 34, one above and one below the recess 33. The mating surface 34 may or may not be magnetically conductive. Relevant for the functionality of the magnetic section 30 is rather that it comprises at least one magnet, in the shown embodiment the first and the second magnet 31,32.

The mating surface 34 of a first sample carrier 1 may fit into the key surface 23 of an adjacent sample carrier 1. The mating surface 34 and the key surface 23 may provide a mechanical stop between adjacent sample carriers 1 which may add to the eddy current slowing configuration provided by the conductive and magnetic sections 20, 30.

The conductive protrusion 21 may be configured to fit into the recess 33 of an adjacent, similarly structured sample carrier 1. Therein, an eddy current may be induced in the conductive protrusion 21.

The recess 33 may be configured to receive the conductive protrusion 21 of an adjacent, similarly structured sample carrier 1. There, the first and second magnets 31,32 of the sample carrier 1 may induce an eddy current in the conductive protrusion 21 of the adjacent sample carrier 1.

Whenever the conductive protrusion 21 is entering and/or has already entered the recess 33 of an adjacent sample carrier 1, these two sample carriers are in an engaged state until the conductive protrusion 21 is fully moved out of the recess 33. In this engaged state, an eddy current is induced in the conductive protrusion 21 whenever there is a relative movement between the two engaged sample carriers 1.

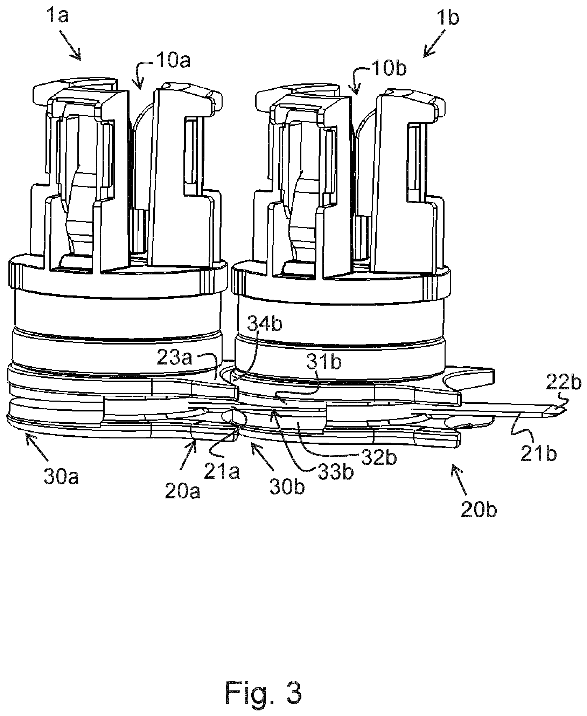

**Fig. 3** shows a perspective side view of two sample carriers, namely a first (left) sample carrier 1a and a second (right) sample carrier 1b, in such an engaged state.

The two sample carriers 1a and 1b may be provided structurally similar and/or identical to the sample carrier 1 shown in Fig. 1. The reference numbers of the features as already described in reference to the preceding figures of the first sample carrier 1a are provided with an "a". The reference numbers of the features of the second sample carrier 1b are provided with a "b" in Fig. 3 for allowing a differentiation.

For example, the first sample carrier 1a comprises the first sample transport section 10a and the second sample carrier 1b comprises the second sample transport section 10b and so on.

In the engaged state shown in Fig. 3, the first protrusion 21a of the first conductive section 20a of the first sample carrier 1a is arranged within the second recess 33b of the second magnetic section 30b of the second carrier 1b. Thus, the first conductive protrusion 21a is arranged within the magnetic field provided by the first and second magnets 31b,32b of the second sample carrier 1b.

Whenever the two sample carriers 1a,1b move relative to each other, e.g., because the first sample carrier 1a moves off to the left of Fig. 3, an eddy current is induced within the conductive protrusion 21 acting against this relative movement and, thereby, slowing the moving sample carrier 1a or 1b. This occurs whenever the two sample carriers 1a,1b move towards each other and whenever they move away from each other.

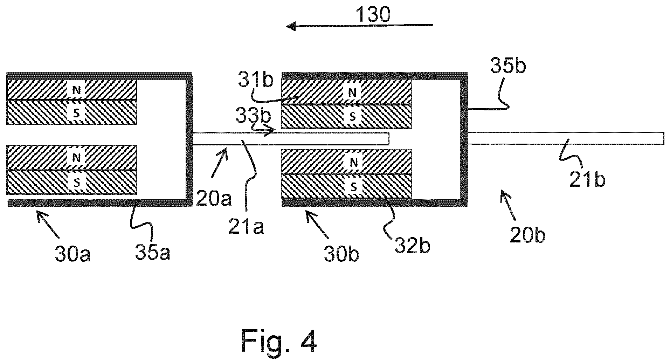

**Fig. 4** shows a schematic of some parts of the first and second sample carrier 1a,1b in the engaged state shown in Fig. 3. The schematic of Fig. 4 only shows the second magnetic section 30b of the second sample carrier 1b (cf. Fig. 3) engaging the first conductive section 20a of the first sample carrier 1a (cf. Fig. 3), but not the upper sections of the sample carriers 1a, 1b.

As shown in Fig. 4, the magnets of the first magnetic section 30a are held in contact to each other by a first magnetically conductive yoke 35a. Similarly, also the magnets 31b, 32b of the second magnetic section 30b are held in contact to each other by a second magnetically conductive yoke 35b. The magnetically conductive yokes 35a,35b collect and channel the magnetic field lines and thus increase the magnetic field within the respective recess (for example 33b).

For example, the second magnetically conductive yoke 35b interacts with the two magnets 31b, 32b of the second sample carrier 1b at their side facing away from the second recess 33b. The first magnetically conductive yoke 35a may be arranged similarly.

The first magnet 31b of the second sample carrier 1b is arranged so that its south pole is facing the second recess 33b and its north pole is in contact with the second magnetically conductive yoke 35b. The second magnet 32b of the second sample carrier 1b is arranged so that its north pole is facing the second recess 33b and its south pole is in contact with the second magnetically conductive yoke 35b. Thus, their magnetic fields within the second recess 33b combine so that the magnetic field lines are arranged substantially perpendicular relative to the second recess 33b and thus the direction of movement of the electrically conductive element 21a.

The magnets of the first sample carrier 1a may be arranged similarly.

Indeed, the magnets 31,32 of the (any) magnetic section 30 may be arranged to that their magnetic field lines are arranged substantially perpendicular to the movement direction 130. This may maximize the eddy current induced in a conductive protrusion 21 entering the recess 33 of the respective magnetic section 30.

The two sample carriers 1a,1b may move in movement direction 130 along the track 120 (cf. Fig. 1). Whenever the first sample carrier 1a stops, e.g., at one of the stations 110-112 of the sample transport system 100, the second carrier 1b advances towards the first sample carrier 1a in the movement direction 130. Whenever it is close enough, its second recess 33b will start engaging and/or encompassing the first conductive protrusion 21a of the first sample carrier 1a. This induces an eddy current within said first conductive protrusion 21a creating a magnetic field acting against the movement of the second sample carrier 1b, thereby slowing it down.

Generally, the slowing process starts as soon as the conductive protrusion 21 enters the recess 33 of the preceding sample carrier 1. The deceleration force is stronger the higher the relative speed between the sample carriers 1a, 1b is.

Herein, it does not matter whether the magnetic section 30 or the conductive section 20 is facing forward in movement direction 130, as long as the sample carriers 1 are all arranged alike along the track 120. The negative acceleration caused by the eddy current will slow the sample carriers 1 whenever they are in an engaged state, whichever way they are facing.

In an alternative embodiment not shown in the figures, the conductive section comprises a recess and the magnetic section comprises a magnetic protrusion. Thus, whenever two consecutive sample carriers come close enough, the magnetic protrusion of a first sample carrier of said two consecutive sample carriers enters the recess within the conductive section of a second sample carrier of said two consecutive sample carriers, thereby inducing an eddy current within the conductive material arranged in the vicinity of the recess. This produces a similar declaration as described above in reference to the embodiment shown in the figures.

Thus, in more general term, at least one of the magnetic section and/or the conductive section may comprise a protrusion. Similarly, at least one of the magnetic section and/or the conductive section may comprise a recess configured to allow said protrusion access. This configuration may increase the interaction between the magnetic section and the conductive section.

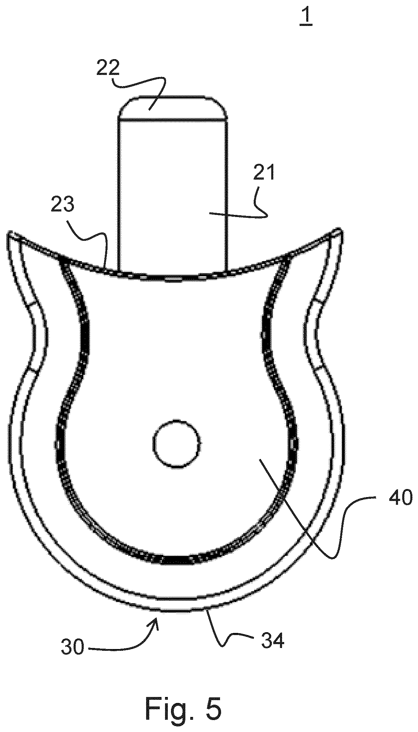

**Fig. 5** shows a bottom view of an embodiment of a sample carrier 1 onto the bottom 40 of it.

As shown in Fig. 5, the conductive section 20 with the conductive protrusion 21 is provided at the opposite side of the sample carrier 1 as the magnetic section 30.

The key surface 23 is arranged at an opposite end of the sample carrier 1 as the mating surface 34, so that the key surface 23 and the mating surface 34 of two adjacent and/or consecutive sample carriers 1 may engage with each other mechanically, e.g., to improve the alignment of the two adjacent sample carriers 1 and/or to provide a mechanical stop for any residual relative speed not slowed down by the eddy current break feature.

As shown in Fig. 5, one of the key surface 23 and the mating surface 34 (in the figures the key surface 23), may be slightly wider than the other to improve and/or ensure a controlled engagement of the sample carriers 1.

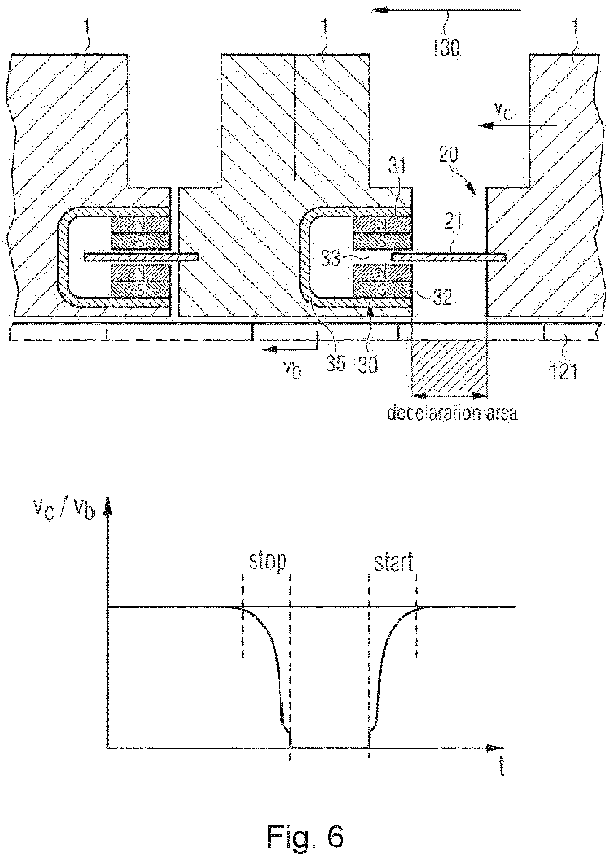

**Fig. 6** shows a schematic cross section of three sample carriers 1 queuing consecutively on a track 120 of a sample transport system 100 (cf. Fig. 1) according to an embodiment. At a lower section of Fig. 6, a schematic diagram indication the involved velocities during a stop and a start phase of the sample carriers 1 is also shown.

All sample carriers 1 are arranged on a conveyor belt 121 of the track 120. Said conveyor belt 121 may be driven and/or move at a belt speed $v_b$ in the movement direction 130. As long as none of the sample carriers 1 is stopped, e.g., mechanically, they all move at the belt speed $v_b$ on the conveyor belt 121 on which they are arranged.

In the situation shown schematically in Fig. 6, the two left carriers 1 are held by a mechanical stop (not shown in the figures) so they are standing still while the conveyor belt 121 moves on under them. For this, the bottom 40 of the sample carriers 1 may be substantially flat to enable the conveyor belt 121 gliding under said bottom 40 (cf. Fig. 2 and 5). A third (right) sample carrier 1 arrives in movement direction 130 at a carrier speed $v_c$ in movement direction 130.

At first, its carrier speed $v_c$ will be equal to the belt speed $v_b$ of the conveyor belt 121 (cf. diagram at the bottom of Fig. 6). However, as soon as the tip of its conductive protrusion 21 enters the recess 33 of the preceding, standing carrier 1, a slowing and/or deceleration of the latest sample carrier 1 starts. The deceleration will occur in a deceleration area marked in the upper part of Fig. 6.

During the deceleration, the carrier speed $v_c$ decreases asymptotically towards zero, never becoming zero though, due to the eddy current induced in the conductive protrusion 21 of the latest, engaged sample carrier 1 (cf. also diagram of Fig. 6). The deceleration depends on the relative speed of the two latest sample carriers 1 in the queue and is getting weaker the slower the latest sample carrier 1 is moving. The decreasing of the carrier speed $v_c$ is shown in the stop section identified in the diagram of Fig. 6. The carrier only comes to a full stop upon impact onto the preceding sample carrier 1.

Similarly, also during the acceleration of the sample carrier 1, e.g., after passing the station 110, 111, 112 (cf. Fig. 1), also the start phase is slightly limited by the engaged state of the two leading sample carriers 1. The acceleration of the carrier speed $v_c$ from 0 to $v_b$ is shown in the start section identified in the diagram of Fig. 6.

Thus, a magnetic damping of moving sample carriers 1 on tracks 120 of sample transport systems 100 is provided, based on the eddy current principle. This may enable increasing a speed limit for the sample carriers 1, e.g., the belt speed $v_b$. This may allow to increase the throughput of automation systems by adding a damping system.

The eddy current principle described above may provide defined deceleration and/or acceleration properties between adjacent sample carriers 1 and track elements like the stations 110-112. The eddy current feature may prevent splashing of liquids at stoppers and/or discs and/or gates and/or queue lines even if and especially when the conveyor belt 121 is running at high speed.

The invention may widely eliminate the impact impulse between sample carriers 1 and may allow decelerating and accelerating the sample carrier 1 on the track 120 in a controlled manner. The transportation speed, e.g., the belt speed $v_b$ of the sample transport system 100, may be increased significantly without compromising the sample quality.

The sample carrier 1 is equipped with the magnetic section at one end and the conductive section at the other end, thereby establishing a magneto-conductive arrangement between consecutive sample carriers 1.

In the sample transport system 100, further elements like stoppers and/or discs and/or gates/diverters may also be equipped with similar magnetic sections and/or conductive sections to provide the damping capability at them accordingly.

The induced deceleration force $\mathbf{F}_{act}$ goes to the square of the relative speed, here the carrier speed $\mathbf{v}_c$:

$$\mathbf{F}_{act} = -e(\mathbf{v}_c^2 \times \mathbf{B}).$$

Therein, $\mathbf{B}$ is the magnetic field within the recess 33 and e is the elementary charge.

In more general terms, the deceleration force $\mathbf{F}_{act}$ may be calculated as:

$$\overline{F}_{act} = \int_V \overline{J} \times \overline{B} \, dV.$$

Wherein:

- $J = \sigma( \times B)$,
- J = current density,
- $\mathbf{B}$ = magnetic flux density,
- V = medium volume,
- $\mathbf{v}$ = relative velocity between the magnetic section 30 and the conductive section 20 and
- $\sigma$ = conductivity of the conductive section 20, e.g., of the conductive protrusion 21.

Herein, both during slowing and during acceleration, the magnetic feature reduces the relative speed, thereby reducing e.g. jerk.

Further sections may be provided as stationary sections along the track 120 of the sample transport system Said other section may be provided along the track 120, e.g., at one, some or all stations 110-112 of the sample transport system 100 shown in Fig. 1. Then, the magnetic interaction between the metallic section and the magnetic section does not depend on the relative speed between consecutive sample carriers, but on the carrier speed $\mathbf{v}_c$ relative to the other section provided along the track 120.

### List of Reference Numerals

| | |
|---|---|
| 1 | sample carrier |
| 1a | first sample carrier |
| 1b | second sample carrier |
| 2 | base section |
| 3 | top section |
| 10 | sample transport section |
| 10a | first sample transport section |
| 10b | second sample transport section |
| 11 | finger |
| 20 | conductive section |
| 20a | first conductive section |
| 20b | second conductive section |
| 21 | conductive protrusion |
| 21a | first conductive protrusion |
| 21b | second conductive protrusion |
| 22 | tip |
| 22b | second tip |
| 23 | key surface |
| 23a | first key surface |
| 30 | magnetic section |
| 30a | first magnetic section |
| 30b | second magnetic section |
| 31 | first magnet |
| 31b | first magnet of the second sample carrier |
| 32 | second magnet |
| 32b | second magnet of the second sample carrier |
| 33 | recess |
| 33b | second recess |
| 34 | mating surface |
| 34b | second mating surface |
| 35 | magnetically conductive yoke |
| 35a | first magnetically conductive yoke |
| 35b | second magnetically conductive yoke |
| 40 | bottom |
| 100 | sample transport system |
| 110 | first station |
| 111 | second station |
| 112 | third station |
| 120 | track |
| 121 | conveyor belt |
| 130 | movement direction |

### Claims

1. A sample carrier (1) configured to transport a sample along a track (120) of a sample transport system (100), the sample carrier (1) comprising:

   - a sample transport section (10) configured to hold and transport the sample;
   - a conductive section (20); and
   - a magnetic section (30);

   wherein:

   - the magnetic section (30) is configured to induce an eddy current in an adjacent conductive section (20) of another element of the sample transport system (100) when there is a relative movement between the sample carrier (1) and this other element; and
   - the conductive section (20) is configured to experience eddy current induced by a magnetic section (30) of another element of the sample transport system (100) when there is a relative movement between the sample carrier (1) and this other element.

2. The sample carrier (1) of claim 1, wherein the conductive section (20) comprises a conductive protrusion (21) protruding from a frontside and/or backside of the sample carrier (1).

3. The sample carrier (1) of claim 2, wherein the conductive protrusion (21) is provided as a conductive plate protruding from the sample carrier (1).

4. The sample carrier (1) of any of the preceding claims, wherein the magnetic section (30) comprises at least one recess (33) configured to receive a conductive section (20) of an adjacent sample carrier (1) as another element of the sample transport system (100) at least partially.

5. The sample carrier (1) of claim 4, wherein the conductive section (20) of the sample carrier (1) is configured to fit into the recess (33) of a structurally identical adjacent sample carrier (1).

6. The sample carrier (1) of claim 4 or 5, wherein the magnetic section (30) comprises at least one magnet (31; 32) arranged at the recess (33) so that a magnetic field of the magnet (31; 32) is arranged in the recess (33).

7. The sample carrier (1) of any of claims 4 to 6, wherein the magnetic section (30) comprises at least two magnets (31, 32) arranged at sides of the recess (33) so that a magnetic field between the two magnets (31, 32) is arranged in the recess (33).

8. The sample carrier (1) of claim 7, wherein the magnetic section (33) further comprises a magnetically conductive yoke (35) contacting both magnets (31, 32), channelling, homogenizing and/or combining their magnetic field.

9. A sample transport system (100) comprising a plurality of sample carriers (1) according to one of the preceding claims and at least one track (120), wherein the sample carriers (1) are configured to be transported along the track (120).

10. A sample transport system (100) according to claim 9, wherein a first (1a) and a second sample carrier (1b) of the plurality of sample carriers (1) are transported behind each other along the track (120), and wherein the first sample carrier (1a) and the second sample carrier (1b) are configured so that the magnetic section (30) of the first sample carrier (1a) induces an eddy current in the conductive section (20) of the second sample carrier (1b) slowing the later sample carrier (1a; 1b) whenever the later sample carrier (1a; 1b) moves into the vicinity of the leading sample carrier (1b; 1a).

11. A sample transport system according to claim 9 or 10, wherein the track (120) comprises a rail guiding the sample carriers (1) along the track (120) and wherein the track (120) further comprises a driven section (121) driving the sample carriers (1) along the track (120).

12. A sample transport system (100) according to any of claims 9 to 11, wherein at least one stationary conductive section and/or at least one stationary magnetic section is arranged at the track (120) of the sample transport system (100), and wherein said stationary conductive and/or magnetic section is configured to interact with the magnetic section (30) and/or the conductive section (20) of the sample carrier (1) wherein the eddy current is induced.

13. A sample transport system (100) according to claim 12, wherein a stationary magnetic section is arranged at the track (120) and the conductive section (20) of the sample carrier (1) acts as eddy current break whenever the sample carrier (1) moves along the track (120) in the vicinity of the stationary magnetic section (30).

14. A sample transport system (100) according to claim 13, wherein the stationary magnetic section comprises a plurality of magnets having magnetic fields getting stronger in a movement direction (130) of the sample carriers (1) along the track (120).

15. Method of slowing one of a plurality of sample carriers (1) configured to transport a sample along a track (120) of a sample transport system (100), wherein:

- the sample carrier (1) is configured for holding and transporting the sample along the track (120);
- a magnetic section (30) and a conductive section (20) are provided at different sample carriers (1) of the sample transport system (100);
- the sample carrier (1) comprises either the magnetic section (30) or the conductive section (20);
- the magnetic section (30) induces an eddy current in the conductive section (20) when the sample carrier (1) is moving along the track (120); and
- the conductive section (20) experiences the eddy current induced by the magnetic section (30), wherein the eddy current is directed so that it acts against a current movement state of the sample carrier (1).

**Patentansprüche**

1. Probenträger (1), der konfiguriert ist, eine Probe entlang einer Bahn (120) eines Probentransportsystems (100) zu transportieren, der Probenträger (1) umfassend:

   - einen Probentransportabschnitt (10), der konfiguriert ist, die Probe zu halten und zu transportieren;
   - einen leitfähigen Abschnitt (20); und
   - einen magnetischen Abschnitt (30);

   wobei:

   - der magnetische Abschnitt (30) konfiguriert ist, einen Wirbelstrom in einem benachbarten leitfähigen Abschnitt (20) eines anderen Elements des Probentransportsystems (100) zu induzieren, wenn eine Relativbewegung zwischen dem Probenträger (1) und diesem anderen Element vorliegt; und
   - der leitfähige Abschnitt (20) konfiguriert ist, einen Wirbelstrom zu erfahren, der von einem magnetischen Abschnitt (30) eines anderen Elements des Probentransportsystems (100) induziert wird, wenn eine Relativbewegung zwischen dem Probenträger (1) und diesem anderen Element vorliegt.

2. Probenträger (1) nach Anspruch 1, wobei der leitfähige Abschnitt (20) einen leitfähigen Vorsprung (21) umfasst, der von einer Vorderseite und/oder Rückseite des Probenträgers (1) vorsteht.

3. Probenträger (1) nach Anspruch 2, wobei der leitfähige Vorsprung (21) als eine leitfähige Platte bereitgestellt ist, die von dem Probenträger (1) vorsteht.

4. Probenträger (1) nach einem der vorstehenden Ansprüche, wobei der magnetische Abschnitt (30) mindestens eine Aussparung (33) umfasst, die konfiguriert ist, einen leitfähigen Abschnitt (20) eines benachbarten Probenträgers (1) als weiteres Element des Probentransportsystems (100) zumindest teilweise aufzunehmen.

5. Probenträger (1) nach Anspruch 4, wobei der leitfähige Abschnitt (20) des Probenträgers (1) konfiguriert ist, um in die Aussparung (33) eines strukturell identischen benachbarten Probenträgers (1) zu passen.

6. Probenträger (1) nach Anspruch 4 oder 5, wobei der magnetische Abschnitt (30) mindestens einen Magneten (31; 32) umfasst, der an der Aussparung (33) angeordnet ist, so dass ein Magnetfeld des Magneten (31; 32) in der Aussparung (33) angeordnet ist.

7. Probenträger (1) nach einem der Ansprüche 4 bis 6, wobei der magnetische Abschnitt (30) mindestens zwei Magnete (31, 32) umfasst, die an den Seiten der Aussparung (33) angeordnet sind, so dass ein Magnetfeld zwischen den beiden Magneten (31, 32) in der Aussparung (33) angeordnet ist.

8. Probenträger (1) nach Anspruch 7, wobei der magnetische Abschnitt (33) weiter ein magnetisch leitfähiges Joch (35) umfasst, das beide Magnete (31, 32) berührt, ihre Magnetfelder kanalisiert, homogenisiert und/oder kombiniert.

9. Probentransportsystem (100), umfassend eine Vielzahl von Probenträgern (1) nach einem der vorstehenden Ansprüche und mindestens eine Bahn (120), wobei die Probenträger (1) dazu konfiguriert sind, entlang der Bahn (120) transportiert zu werden.

10. Probentransportsystem (100) nach Anspruch 9, wobei ein erster (1a) und ein zweiter Probenträger (1b) der Vielzahl von Probenträgern (1) hintereinander entlang der Bahn (120) transportiert werden, und wobei der erste Probenträger (1a) und der zweite Probenträger (1b) konfiguriert sind, so dass der magnetische Abschnitt (30) des ersten Probenträgers (1a) einen Wirbelstrom in dem leitfähigen Abschnitt (20) des zweiten Probenträgers (1b) induziert, der den nachfolgenden Probenträger (1a; 1b) abbremst, wann immer sich der nachfolgende Probenträger (1a; 1b) in die Nähe des vorangehenden Probenträgers (1b; 1a) bewegt.

11. Probentransportsystem nach Anspruch 9 oder 10, wobei die Bahn (120) eine Schiene umfasst, die die Probenträger (1) entlang der Bahn (120) führt und wobei die Bahn (120) weiter einen angetriebenen Abschnitt (121) umfasst, der die Probenträger (1) entlang der Bahn (120) antreibt.

12. Probentransportsystem (100) nach einem der Ansprüche 9 bis 11, wobei mindestens ein stationärer leitfähiger Abschnitt und/oder mindestens ein stationärer magnetischer Abschnitt an der Bahn (120) des Probentransportsystems (100) angeordnet ist, und wobei der stationäre leitfähige und/oder magnetische Abschnitt konfiguriert ist, mit dem magnetischen Abschnitt (30) und/oder dem leitfähigen Abschnitt (20) des Probenträgers (1) zu interagieren, wobei der Wirbelstrom induziert wird.

13. Probentransportsystem (100) nach Anspruch 12, wobei ein stationärer magnetischer Abschnitt an der Bahn (120) angeordnet ist und der leitfähige Abschnitt (20) des Probenträgers (1) als Wirbelstrombremse wirkt, wenn sich der Probenträger (1) entlang der Bahn (120) in der Nähe des stationären magnetischen Abschnitts (30) bewegt.

14. Probentransportsystem (100) nach Anspruch 13, wobei der stationäre Magnetabschnitt eine Vielzahl von Magneten umfasst, die Magnetfelder aufweisen, die in einer Bewegungsrichtung (130) der Probenträger (1) entlang der Bahn (120) stärker werden.

15. Verfahren zum Abbremsen eines von mehreren Probenträgern (1), die konfiguriert sind, eine Probe entlang einer Bahn (120) eines Probentransportsystems (100) zu transportieren, wobei:

- der Probenträger (1) konfiguriert ist, die Probe zu halten und entlang der Bahn (120) zu transportieren;
- ein magnetischer Abschnitt (30) und ein leitfähiger Abschnitt (20) an verschiedenen Probenträgern (1) des Probentransportsystems (100) vorgesehen sind;
- der Probenträger (1) entweder den magnetischen Abschnitt (30) oder den leitfähigen Abschnitt (20) umfasst;
- der magnetische Abschnitt (30) einen Wirbelstrom in dem leitfähigen Abschnitt (20) induziert, wenn sich der Probenträger (1) entlang der Bahn (120) bewegt; und
- der leitfähige Abschnitt (20) den durch den magnetischen Abschnitt (30) induzierten Wirbelstrom erfährt, wobei der Wirbelstrom gerichtet ist, so dass es gegen einen aktuellen Bewegungszustand des Probenträgers (1) wirkt.

**Revendications**

1. Porte-échantillon (1) configuré pour transporter un échantillon le long d'une voie (120) d'un système (100) de transport d'échantillon, le porte-échantillon (1) comprenant :

- une section (10) de transport d'échantillon configurée pour maintenir et transporter l'échantillon ;
- une section (20) conductrice ; et
- une section (30) magnétique ;

dans lequel :

- la section (30) magnétique est configurée pour induire un courant de Foucault dans une section (20) conductrice adjacente d'un autre élément du système (100) de transport d'échantillon lorsqu'il y a un mouvement relatif entre le porte-échantillon (1) et cet autre élément ; et
- la section (20) conductrice est configurée pour subir un courant de Foucault induit par une section (30) magnétique d'un autre élément du système (100) de transport d'échantillon lorsqu'il y a un mouvement relatif entre le porte-échantillon (1) et cet autre élément.

2. Porte-échantillon (1) selon la revendication 1, dans lequel la section (20) conductrice comprend une saillie (21) conductrice faisant saillie d'une face avant et/ou d'une face arrière du porte-échantillon (1).

3. Porte-échantillon (1) selon la revendication 2, dans lequel la saillie (21) conductrice est fournie en tant qu'une plaque conductrice faisant saillie du porte-échantillon (1).

4. Porte-échantillon (1) selon l'une quelconque des revendications précédentes, dans lequel la section (30) magnétique comprend au moins un évidement (33) configuré pour recevoir une section (20) conductrice d'un porte-échantillon (1) adjacent en tant qu'un autre élément du système (100) de transport d'échantillon au moins partiellement.

5. Porte-échantillon (1) selon la revendication 4, dans lequel la section (20) conductrice du porte-échantillon (1) est configurée pour s'ajuster dans l'évidement (33) d'un porte-échantillon (1) adjacent structurellement identique.

6. Porte-échantillon (1) selon la revendication 4 ou la revendication 5, dans lequel la section (30) magnétique comprend au moins un aimant (31 ; 32) agencé au niveau de l'évidement (33) de sorte qu'un champ magnétique de l'aimant (31 ; 32) soit agencé dans l'évidement (33).

7. Porte-échantillon (1) selon l'une quelconque des revendications 4 à 6, dans lequel la section (30) magnétique comprend au moins deux aimants (31 ; 32) agencés au niveau de côtés de l'évidement (33) de sorte qu'un champ magnétique entre les deux aimants (31 ; 32) soit agencé dans l'évidement (33).

8. Porte-échantillon (1) selon la revendication 7, dans lequel la section (33) magnétique comprend en outre une culasse (35) magnétiquement conductrice en contact avec les deux aimants (31 ; 32), qui canalise, homogénéise et/ou combine leur champ magnétique.

9. Système (100) de transport d'échantillon comprenant une pluralité de porte-échantillons (1) selon l'une des revendications précédentes et au moins une voie (120), dans lequel les porte-échantillons (1) sont configurés pour être transportés le long de la voie (120).

**10.** Système (100) de transport d'échantillon selon la revendication 9, dans lequel un premier (1a) et un second (1b) porte-échantillon de la pluralité de porte-échantillons (1) sont transportés l'un derrière l'autre le long de la voie (120), et dans lequel le premier porte-échantillon (1a) et le second porte-échantillon (1b) sont configurés de sorte que la section (30) magnétique du premier porte-échantillon (1a) induise un courant de Foucault dans la section (20) conductrice du second porte-échantillon (1b) ralentissant le dernier porte-échantillon (1a ; 1b) chaque fois que le dernier porte-échantillon (1a ; 1b) se déplace à proximité du porte-échantillon (1b ; 1a) de tête.

**11.** Système de transport d'échantillon selon la revendication 9 ou la revendication 10, dans lequel la voie (120) comprend un rail guidant les porte-échantillons (1) le long de la voie (120) et dans lequel la voie (120) comprend en outre une section (121) entraînée entraînant les porte-échantillons (1) le long de la voie (120).

**12.** Système (100) de transport d'échantillon selon l'une quelconque des revendications 9 à 11, dans lequel au moins une section conductrice fixe et/ou au moins une section magnétique fixe est agencée au niveau de la voie (120) du système (100) de transport d'échantillon, et dans lequel ladite section conductrice et/ou magnétique fixe est configurée pour interagir avec la section (30) magnétique et/ou la section (20) conductrice du porte-échantillon (1) dans lequel le courant de Foucault est induit.

**13.** Système (100) de transport d'échantillon selon la revendication 12, dans lequel une section magnétique fixe est agencée au niveau de la voie (120) et la section (20) conductrice du porte-échantillon (1) agit comme une rupture de courant de Foucault chaque fois que le porte-échantillon (1) se déplace le long de la voie (120) à proximité de la section (30) magnétique fixe.

**14.** Système (100) de transport d'échantillon selon la revendication 13, dans lequel la section magnétique fixe comprend une pluralité d'aimants présentant des champs magnétiques devenant plus forts dans une direction (130) de mouvement des porte-échantillons (1) le long de la voie (120).

**15.** Procédé de ralentissement de l'un d'une pluralité de porte-échantillons (1) configurés pour transporter un échantillon le long d'une voie (120) d'un système (100) de transport d'échantillon, dans lequel :

- le porte-échantillon (1) est configuré pour maintenir et transporter l'échantillon le long de la voie (120) ;

- une section (30) magnétique et une section (20) conductrice sont fournies au niveau de différents porte-échantillons (1) du système (100) de transport d'échantillon ;
- le porte-échantillon (1) comprend soit la section (30) magnétique, soit la section (20) conductrice ;
- la section (30) magnétique induit un courant de Foucault dans la section (20) conductrice lorsque le porte-échantillon (1) se déplace le long de la voie (120) ; et
- la section (20) conductrice subit le courant de Foucault induit par la section (30) magnétique, dans lequel le courant de Foucault est dirigé de sorte qu'il agisse contre un état de mouvement actuel du porte-échantillon (1).

100

120

110

130

111

112

Fig. 1

Fig. 2

Fig. 3

Fig. 4

1

22

23

21

40

30

34

Fig. 5

decelaration area

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8973736 B2